# EUROPEAN PATENT SPECIFICATION

(11) **EP 1 489 724 B1**
(45) Date of publication and mention of the grant of the patent: **24.09.2008**
(21) Application number: 04014112.9
(22) Date of filing: 16.06.2004
(51) Int. Cl.: H02K 3/28, H02K 23/04, H01R 39/32, H02K 23/30, H02K 23/26, F02N 11/00

(54) **Brush type DC electric machine**
Gleichstrommaschine mit Stromwender
Machine électrique à courant continu du type à balais

(30) Priority: 17.06.2003 JP 2003172408; 10.06.2004 US 709971
(43) Date of publication of application: 22.12.2004
(73) Proprietor: Kabushiki Kaisha MORIC, Shuchi-gun, Shizuoka-ken (JP)
(72) Inventor: Kaneko, Ryoji K.K. Moric, Shuchi-gun Shizuoka-ken (JP)
(74) Representative: TBK-Patent

(56) References cited:
- WO-A-02/21665
- JP-A- 7 203 652
- JP-A- 10 174 403
- US-A- 6 127 759

## Description

### Background of Invention

This invention relates to a brush type rotating DC electrical machine and more particularly to a coil winding and commutator and brush construction for such a machine.

Typically this type of DC electric machine with brushes comprises a rotational shaft of a rotor and a stator. The stator generally is comprised of a plurality of circumferentially spaced permanent magnets that cooperate with a plurality of circumferentially spaced radially extending magnetic pole teeth formed on the rotor or armature and around which coils are wound. To transfer electrical power between the coil windings and external terminals of the machine a commutator is provided on the rotor, generally adjacent to an axial end of the magnetic pole teeth. The commutator has a plurality of conductive segments disposed in an annular shape with certain clearances therebetween to which ends of windings of the coils are connected. Brushes in sliding contact with the commutator segments transmit the electrical energy to or from the external terminals.

In such a DC electric machines, it is necessary that the leakage of voltage between the brushes is reduced and energy loss due to phase shift in the coils is suppressed. Phase shift appears in the form of electromagnetic energy loss when windings of adjacent coils are energized in opposite directions to each other. Therefore, to prevent phase shift, it is desirable that adjacent coils are energized in opposite winding directions as the flow directions reverse upon rotation adjacent windings are energized in the same direction. Also to prolong the life of brushes, it is desirable that the sliding contact friction between brushes and commutator segments associated during rotation is kept stable and constant without variation.

A DC electric motor with brushes of this type is disclosed in published Japanese Patent Document JP-A-2001-275327. In this DC electric motor ends of windings of coils and commutator segments are connected such that a series of the coils wound on magnetic pole teeth continue like a line drawn by a pen in one stroke and the coils are energized by two brushes through the segments. The width of the two brushes is as large as that of two segments, the interval between the brushes is as large as that of two segments, the interval between the brushes is as large as that of one segment, and the coils are disposed parallel to each other between the brushes to reduce motor inductance so that the life of the brushes is prolonged and smoother rotation is effected.

However in a coil connection structure described in this document, no reference is made to the direction of electric currents in the coils when an electric current flows from positive (+) side to negative (-) side of the two brushes, it is difficult to say that this coil connection structure will prevent phase shift as a result of energization of rotating coils in opposite directions, normal and reverse. Also, besides the connection of the ends of coil windings to the segments, wire connection between the segments and cutting work after winding are required, which complicates connection work around the segments, as well as wiring structure.

In addition, since only one of the clearances (insulating areas) between the commutator segments is contained in an interval between the brushes, the ability to withstand voltage without leakage is reduced. Also, since unused segments still remain after coils are wound on all the magnetic pole teeth, efficiency of use is poor and the sliding contact friction resistance to the brushes varies during rotation, which accelerates deterioration of the brushes.

Document JP 101 744 03 discloses a DC electric machine as described in the preamble of claim 1. In detail, this document discloses a DC motor comprising a plurality of magnet pole teeth, coils wound around these teeth and circumferentially spaced commutators segments. Coil ends are connected to the commutator segments so that the current flows to adjacent coil pairs in the same circuit in opposite directions.

It is a principal object of the invention to provide a DC electric machine capable of preventing phase shift with a simple connection structure, increasing the ability of brushes to accept high voltages without leakage and suppressing their deterioration so that their life can be prolonged.

It also is a further object of the invention to improve commutator segment utilization and simplify its wiring.

This object is solved by DC electric machine as set out in claim 1.

Further advantageous developments are defined in the dependent claims.

In the following, the drawings are shortly described.

FIG. 1 is a cross sectional view of a rotating electrical machine in the particular form of an electrical starting motor for an internal combustion engine.

FIGS. 2A-2C are developed views of the main electrical machine components of a first embodiment comprised of the pole teeth, the surrounding coil windings, the permanent magnets, and the commutator segments showing the current flow during successive equal partial rotations.

FIGS. 3A-3C are developed views, in part similar to FIGS. 2A-2C, of the like components of a second embodiment showing respectively the first and second groups of coil windings and the combined coil windings.

FIGS. 4A-4C are developed views, in part similar to FIGS. 2A-2C and 3A-3C, of the like components of a third embodiment showing the current flow during successive equal partial rotations.

FIG. 5. is a developed view, in part similar to FIGS. 2A, 3C and 4A, showing the construction of a fourth embodiment.

FIG. 6 is a developed view, in part similar to FIGS. 2A, 3C, 4A and 5 showing the construction of a fifth embodiment.

FIG. 7 is a developed view, in part similar to FIGS. 2A, 3C, 4A, 5 and 6 showing the construction of a sixth embodiment without the permanent magnets.

FIGS. 8A- 8C are developed views, in part similar to FIGS. 2A-2C and 3A-3C, of the like components of the sixth embodiment showing the permanent magnets and the current flow during successive equal partial rotations.

FIGS. 9A-9C in part similar to FIGS. 3A-3C of the like components of a seventh embodiment showing respectively the first and second groups of coil windings and the combined coil windings.

FIG. 10 is a developed view, in part similar to FIGS. 2A, 3C, 4A, 5, 6 and 7 showing the construction of a eighth embodiment without the permanent magnets.

FIGS. 11A- 11C are developed views, in part similar to FIGS. 2A-2C, 3A-3C, and 10 of the like components of the eighth embodiment showing the permanent magnets and the current flow during successive equal partial rotations.

FIGS. 12A-12C are views in part similar to FIG. 10, but show how two different series of coils may be formed on each pole tooth like the embodiment of FIGS. 9A-9C.

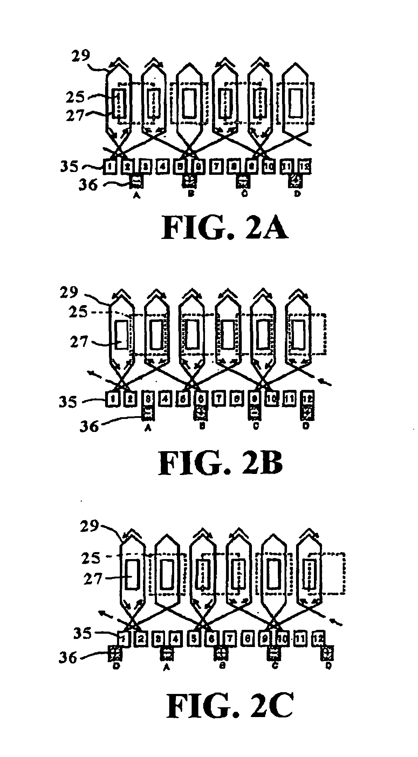

FGS. 13A is a view in part similar to FIG. 2A, but shows an embodiment where the commutator segments are connected to each other in a way to decrease the required number of brushes.

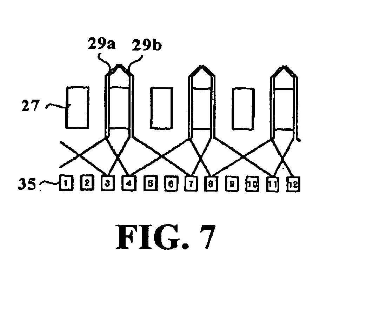

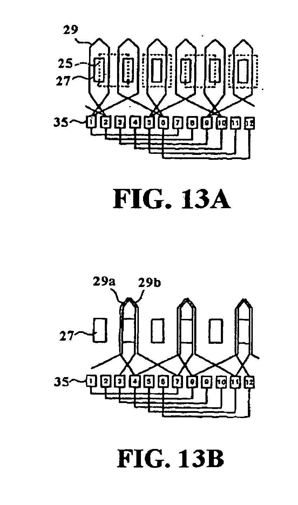

FIG. 13B is a view in part similar to FIG. 7, but shows another embodiment where the commutator segments are connected to each other in a way to decrease the required number of brushes.

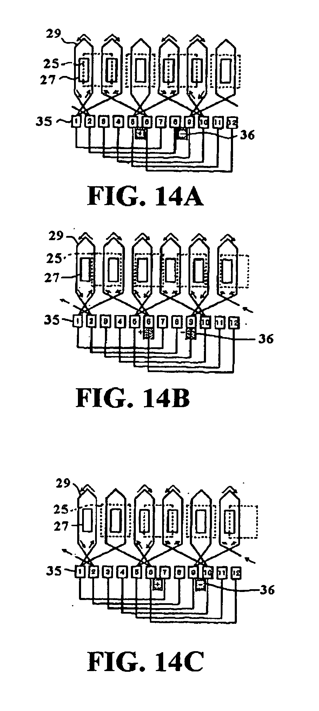

FIGS. 14A-14C are developed views illustrating successive conditions of the coil connection utilized in the embodiment of FIG. 13A and having only two brushes.

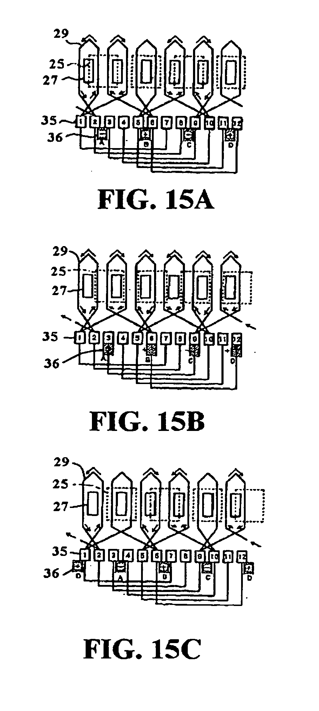

FIGS. 15A-15C are developed views illustrating successive conditions of the coil connection utilized in the embodiment of FIG. 13A and having four brushes.

Referring now in detail to the drawings and initially to FIG. 2, a rotating electrical machine in the form of a DC electric starter motor to which this invention is applied, is indicated generally by the reference numeral 21. This electric motor 21 is used, for example, as a starter of a motorcycle. The starter motor 21 includes an outer housing comprised of a cylindrical yoke portion 22 closed at opposite ends by end closures 23 and 24.

The outer housing and particularly the central yoke portion 22 comprises a stator, that includes permanent magnets 25 that suitably for example by bonding on the inside surface of the yoke 22. The magnets 25 comprise a plurality of split arc-shaped bodies disposed along the inside circumferential surface of the yoke 22 at regular circumferential intervals.

A rotor, indicated generally by the reference numeral 26 is journalled, in a manner to be described, inside the stator. The rotor 26 has central portion from which a plurality of circumferentially spaced magnetic pole teeth 27extend radially to face the magnets25. Each of the magnetic pole teeth 27 is generally T-shaped with its head in proximity to the magnets25. Siots28are formed between adjacent magnetic pole teeth 27. Coils (shown by a dotted line and indicated by the reference numerals 29) are wound on each magnetic pole tooth 27and through the slots28.

The rotor 26is suitably mounted on a rotor shaft 31 which is journalled at its opposite ends by bearings 32 carried by the end closures 23 and 24. One end of the rotor shaft 31 extends beyond the end closure 23 and carries a starter gear 33 for engagement with an engine shaft (not shown) in any suitable manner.

A commutator, indicated generally at34, is mounted on the rotor shaft 31 at one end in the axial direction of the coils 29, adjacent the end closure 24 in the illustrated embodiment. The commutator 34 is made up of a plurality of segments 35 disposed in an annular shape with certain clearances therebetween. Both ends of the respective coil winding 29 are connected to given segments 35 in manners to be described later by reference to the remaining figures.

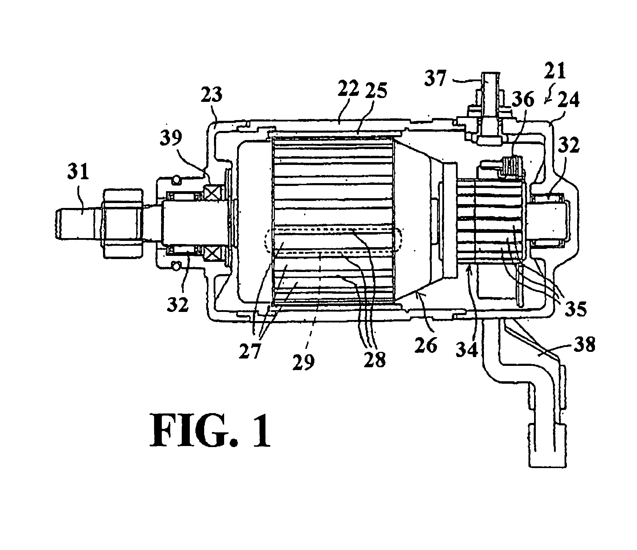

Spring biased brushes 36, in a number and spacing to be described later by reference to the remaining figures and only one of which appears in FIG. 1, provide the electrical connection with the segments 35. Certain of the brushes 36 are connected to a positive (+) battery terminal by a positive pole terminal connectors 37. Other of the brushes are connected to the negative (-) battery terminal through a ground connection provided by a mounting bracket 38 of the motor housing formed integrally with the end closure 24.

Finally an oil seal 39 carried by the end closure 23 sealingly engages the rotor shaft 31 to complete the general description of a type of rotating electrical machine that can embody the invention.

Some specific wiring patterns and component layouts and coil spacing embodying the invention will be described by reference to the remaining figures. Before referring specifically to them, however, some general comments will be made about the common features. The number m of permanent split arc-shaped magnet segments25 is an even number of four or more. That is, m=4, 6, 8,.... If m=4, the magnet has the shape of an arc of approximately 90°, if m=6, of approximately 60°, and if m=8, of approximately 45°. The number t of magnetic pole teeth 27 is represented as t=m+2, and the number s of commutator segments 35, as s=2t. The number b of brushes 36 is represented as b=m.

Referring first to the embodiment of FIGS. 2A-2C, this shows development view of a coil connection structure according to a first embodiment of this invention. This embodiment is an example in which the number m of permanent magnets 25 is four, the number t of magnetic pole teeth 27 is six, the number s of commutator segments 35 is twelve, and the number b of brushes 36 is four. In all figures the commutator segments 35 are numbered in order according to their circumferential positions for ease of understanding and the brushes 36 are lettered alphabetically in the same order (A, B, C and D or the like depending on their number).

FIGS. 2A-C illustrate successive conditions of the coil connection when brushes 36 move rightward in the figure by a distance equal to half commutator segment relative to the segments as a result of rotation of the rotor 26. In all of the views the coils are depicted as only a single winding for simplification and to facilitate showing the direction of the coil winding.

A coil 29 is wound on each of the six magnetic pole teeth 27 facing the four permanent magnets 25. Both ends of the winding of each coil 29 are connected to segments having a given positional relation among twelve segments (1-12). As shown in the figures, both ends of the winding of each coil 29 are connected to the segments 35, across each other and across one end of the winding of an adjacent coil 29. The number s of segments is twice the number t of magnetic pole teeth, and two segments 35 are provided, corresponding to each magnetic pole tooth 27, opposing the tooth 27. Ends of the winding of a coil 29 on each magnetic pole tooth 27 are each connected to the more distant one of the two segments right under the magnetic pole tooth, or to the more distant one of the two segments right under the adjacent magnetic pole tooth.

The coils connected to the segments right under each magnetic pole tooth and the coil connected to the segments right under the adjacent magnetic pole tooth are disposed alternately. Therefore, the segments are connected to the coils in twos, with two segments left unconnected therebetween, to form a series of six coils. Thus, as shown in the figure, six segments #1, 2, 5, 6, 9 and 10 out of the twelve segments are used to connect six coils 29. The series of six coils 29 are configured such that, when energized in the direction of arrows through the brushes 36, adjacent coils 29 have opposite energization directions, when energized either in normal or reverse, and parallel adjacent windings of the coils 29 have the same energization direction. This eliminates phase shift.

Twelve segments 35 constituting the rotor commutator 34 rotate with coils 29, and four brushes 36 (A-D) are in sliding contact with the segments 35. FIGS. 2A-C illustrate successive conditions of the coil connection when brushes 36 move rightward in the figure by a half segment relative to the segments as a result of rotation of the rotor. As shown in the figures, an interval between adjacent brushes 36 is wide enough to contain two of the clearances between the segments 35. Such an interval allows the existence of two or more of the clearances between the segments 35 as an insulating area, so that the insulating property is improved, as well as the capability to withstand voltage without leakage.

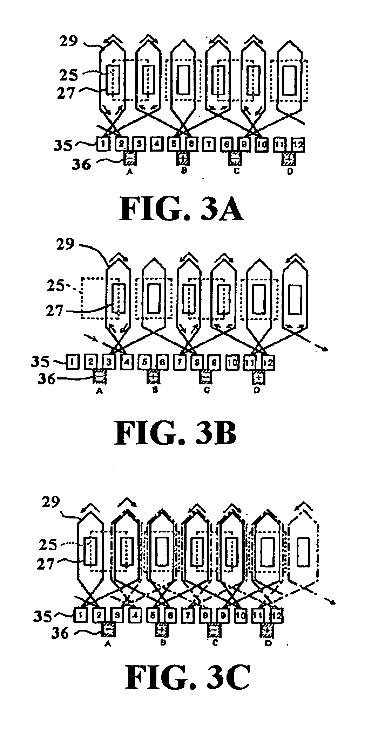

FIG. 3 shows a second embodiment of this invention that is in part similar to that of FIGS. 2A-2C. However inn this embodiment the unused six segments (#3, 4, 7, 8, 11, 12) in the example of FIGS. 2A-2C are used to form a second series of coils 29 on magnetic pole teeth 27 in overlapping relation. That is, as shown in FIG. 3A, six segments (#1, 2, 5, 6, 9, 10) are used to form a first series of six coils 29 as in FIGS. 2A-2C, and, in addition, as shown in FIG. 3B, the remaining six segments (#3, 4, 7, 8, 11, 12) are used to form a second series of six coils 29 on the magnetic pole teeth 27 in overlapping relation. The total coil connection structure of the rotor is formed by overlapping FIG.3A and FIG.3B as shown in FIG. 3C. Thus all the segments 35 are utilized uniformly, so that efficiency of use of the segments is improved and stable high output can be effected, Also the sliding contact friction resistance to the brushes 36 during rotation becomes approximately constant, so that deterioration of the brushes 36 is suppressed and their life can be prolonged. In the figure FIG. 3C, in which a series of coils of FIG. 3A and a series of coils of FIG. 3B are overlapped, the series of coils of FIG. 3B are shown by dot and dash lines.

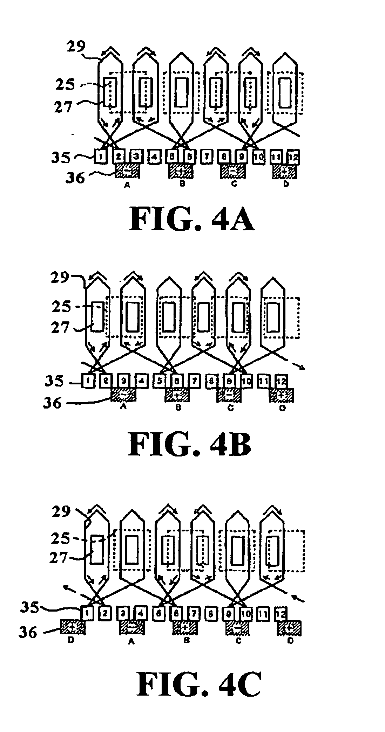

FIGS. 4A-4C show a third embodiment of this invention which is generally similar to that of FIGS. 2A-2C. Like those figures, FIGS. 4A-C illustrate successive conditions of the coil connection when brushes move rightward in the figure by a half segment relative to the segments as a result of rotation of the rotor. In this embodiment the width of the brush 36 is increased and thus the interval between the brushes is decreased to a degree. In this example, only one of the clearances between the segments is contained in the interval between the brushes at the position of FIG. 4B, but, at the positions of FIGS. 4A and C, the interval between the brushes is wide enough to contain two of the clearances between the segments. Thus, the interval between the brushes 36 is set such that, at least at a position during rotation, it contains two or more of the clearances between the segments 35, so that the mean interval between the brushes is widened and a sufficiently large voltage without leakage can be permitted. This allows fewer restrictions to the brush width and a larger degree of freedom in designing.

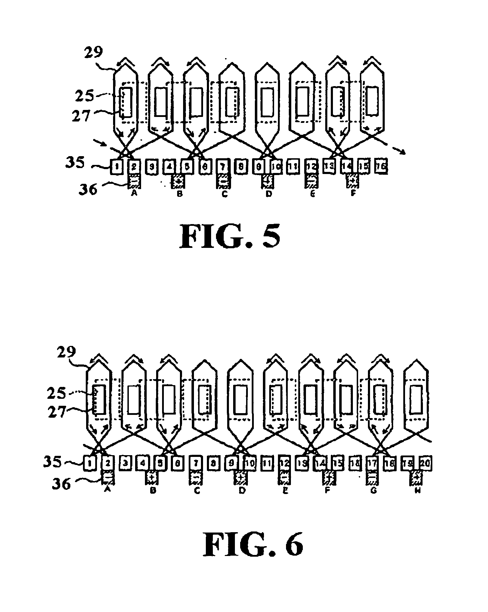

FIG. 5 is a development view of a fourth embodiment. This embodiment shows an example in which the number m of magnets 25 is six, the number t of magnetic pole teeth 27 is eight, the number s of commutator segments 35 is sixteen, and the number b of brushes 36 is six.

As in the embodiment of FIGS. 2A-2C, both ends of the winding of each coil 29 are connected to the segments 35, across each other and across one end of the winding of an adjacent coil. The number s of segments is twice the number t of magnetic pole teeth, and two segments 35 are provided, corresponding to each magnetic pole tooth 27, right under the tooth. Ends of the winding of a coil 29 on each magnetic pole tooth 27 are each connected to the more distant one of the two segments right under the magnetic pole tooth, or to the more distant one of the two segments right under the adjacent magnetic pole tooth. The coils connected to the segments right under each magnetic pole tooth and the coils connected to the segments right under the adjacent magnetic pole tooth are disposed alternately.

Thus, as shown in this figure, eight segments #1, 2, 5, 6, 9, 10, 13 and 14 out of the sixteen segments are used to connect eight coils 29. The series of eight coils 29 are configured such that, when energized in the direction of arrows through the brushes 36, adjacent coils have opposite energization directions, normal and reverse, and parallel adjacent windings of the coils 29 have the same energization direction. This eliminates phase shift.

Also in this embodiment, as in this case where m=6, as in the embodiment of FIGS. 3A-3C, the unused segments (#3, 4, 7, 8, 11, 12, 15, 16) may be used to form a second series of coils in overlapping relation.

FIG. 6 shows still another embodiment of this invention. This embodiment shows an example in which the number m of permanent magnets 25 is eight, the number t of magnetic pole teeth 27 is ten, the number s of commutator segments 35 is twenty, and the number b of brushes 36 is eight. As in the embodiment of FIGS. 2A-2C, both ends of the winding of each coil 29 are connected to the segments 35, across each other and across one end of the winding of an adjacent coil. The number s of segments is twice the number t of magnetic pole teeth, and two segments 35 are provided, corresponding to each magnetic pole tooth 27, right under the tooth. Ends of the winding of a coil 29 on each magnetic pole tooth 27 are each connected to the more distant one of the two segments right under the magnetic pole tooth, or to the more distant one of the two segments right under the adjacent magnetic pole tooth. The coils connected to the segments right under each magnetic pole tooth and the coils connected to the segments right under the adjacent magnetic pole tooth are disposed alternately.

Thus, as shown in the figure, ten segments #1, 2, 5, 6, 9, 10, 13, 14, 17 and 18 are used to connect ten coils 29. The series of ten coils 29 are configured such that, when energized in the direction of arrows through brushes 36, adjacent coils have opposite energization directions, when energized in both normal and reverse, and parallel adjacent windings of the coils 29 have the same energization direction. This eliminates phase shift.

Also in this case where m=8, as in the embodiment of FIGS. 3A-3C, the unused ten segments (#3, 4, 7, 8, 11, 12, 15, 16, 19, 20) may be wound to form a second series of coils in overlapping relation.

FIG. 7 is a circumferential developed view of still another embodiment of this invention. This embodiment shows an example in which six magnetic pole teeth 27 and twelve segments 35 are provided, three magnetic pole teeth 27 out of the six magnetic pole teeth 27 are used to form two oppositely wound coils 29a, 29b, one each for each magnetic pole tooth 27, in overlapping relation. These coils are connected to six segments 35 out of the twelve segments to form a series of coils.

As shown in this figure, of the two coils 29a, 29b formed in overlapping relation, both ends of the winding of one coil 29a are connected to two adjacent segments 35, across each other. Both ends of the winding of the other coil 29b are connected to segments 35 at distant positions, in separated relation from each other. The segments 35, as in the foregoing embodiments, are connected to the coils in twos, with two segments left unconnected therebetween.

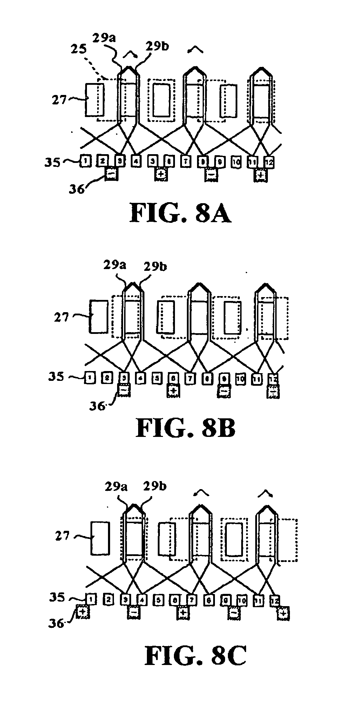

FIGS. 8A-8C illustrate the brushes 36 in successive conditions of the coil connection, in the embodiment of FIG. 7, when brushes 36 move rightward in the figure by a half segment relative to the segments as a result of rotation of the rotor. Arrows show the energization directions from the brushes 36.

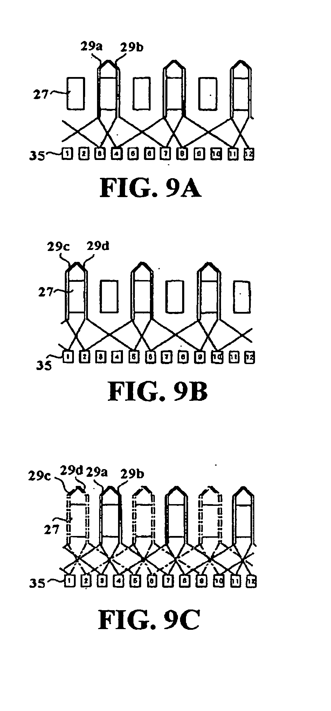

FIGS. 9A-9C shows an example in which unused three magnetic pole teeth and six segments in the embodiment of FIG. 7 are used to form a different series of coils in the same shape as that of FIG. 7, in overlapping relation. FIG. 9A is the same as FIG. 7, in which two coils 29a, 29b are formed on each magnetic pole tooth 27. FIG. 9B shows a different series of coils in the same shape as that of FIG. 9A, formed with different magnetic pole teeth and different segments. Two coils 29c, 29d are formed on each magnetic pole tooth, and these coils are connected to form a second series of coils. FIGS.9A and 9B are superimposed to constitute FIG. 9C.

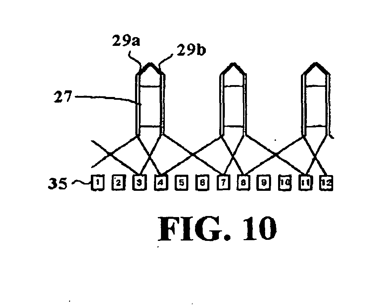

FIG. 10 illustrates still another embodiment of this invention that is like that of FIG. 7 except that the unused three magnetic pole teeth of the total six magnetic pole teeth in the foregoing embodiment are omitted. That is, there are three magnetic pole teeth 27 and twelve commutator segments 35. Two coils 29a and29b are formed on each of the three magnetic pole teeth 27 in overlapping relation. These coils are connected to six segments 35 out of the twelve segments to form two series of coils.

As in the embodiment of FIG. 7, the two coils 29a are 29b formed in overlapping relation, both ends of the winding of one coil 29a are connected to two adjacent segments 35, across each other. Both ends of the winding of the other coil 29b are connected to segments 35 at distant positions, in separated relation from each other. The segments 35 are connected to the coils in twos, with two segments left unconnected therebetween.

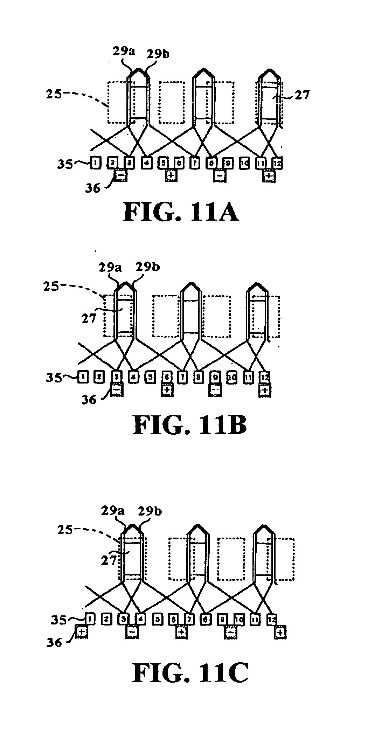

FIGS. 11A-C illustrate successive conditions of the coil connection, in the embodiment of FIG. 10, when brushes move rightward in the figure in half segment intervals relative to the segments 35 as a result of rotation of the rotor.

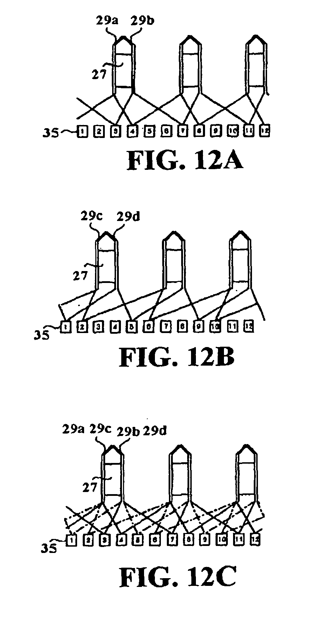

FIGS. 12A-12C shows an example in which unused six commutator segments in the embodiment of FIG. 10 are used to form two different series of coils in the same shape as that of FIG. 10, in overlapping relation. FIG. 12A is the same as FIG. 10, and has two coils 29a, 29b are formed on each magnetic pole tooth 27. FIG. 12B shows a different series of coils in the same shape as that of FIG. 12A, connected with different commutator segments. Two coils 29c and29d are formed on each magnetic pole tooth, and each or these coils are connected to form a series of coils. FIG. 12C shows how the coils of FIGS.12A and 12B are overlapped.

FIGS. 13A and 13B each show a coil connection structure of two further embodiment of this invention in which the commutator segments are connected to each other in a way to decrease the required number of brushes (no larger than four).

FIG. 13A shows an example in which, using the same coil winding structure as the embodiment of FIG. 2, but where each of the commutator segments is connected to a sixth adjacent segment. FIG. 13B shows an example in which, using the same coil winding structure as the embodiment of FIG. 7, but where each of the commutator segments is connected to a sixth adjacent segment. Although six magnetic pole teeth and twelve segments are provided in both FIGS. 13A and B, this invention is not limited to that, and any connection structure of t magnetic pole teeth and 2t segments is applicable if only segments are each connected to a t-th adjacent segment. In addition commutator segments may be connected to each other in this way, in an arrangement of two, three or four brushes to eliminate phase shift and the withstood voltage can be increased.

FIGS. 14A-14C illustrate successive conditions of the coil connection utilized in the embodiment of FIG. 13A and having only two brushes, when the brushes move rightward in the figure by a half segment relative to the commutator segments as a result of rotation of the rotor.

FIGS. 15A-15C illustrate successive conditions of the coil connection utilized in the embodiment of FIG. 13A and having four brushes, when the brushes move rightward in the figure by a half segment relative to the commutator segments as a result of rotation of the rotor.

Thus from the foregoing description of the several embodiments it should be apparent that the objects of the invention have been accomplished. For example, a series of coils are connected such that their directions of energization are arranged alternately when energized both in the normal and reverse directions, so that phase shift can be prevented. Also in some embodiments, the interval between the brushes is wide enough to contain two of the clearances between the commutator segments permitting the insulating property to be improved, as well as the voltage withstood without leakage. Also in some embodiments, coils are wound on each magnetic pole tooth in overlapping relation and the coils are connected to the same number of segments to form two series of coils whose energization directions are arranged to all the magnetic pole teeth. Therefore, efficiency of use of the segments is improved and stable high output can be effected. Also, the segments are utilized uniformly and the sliding contact friction resistance to the brushes during rotation becomes approximately constant, so that deterioration of the brushes is suppressed and their life can be prolonged. Of course those skilled in the art will readily understand that the described embodiments are only exemplary of forms that the invention may take and that various changes and modifications may be made without departing from the spirit and scope of the invention, as defined by the appended claims.

Several embodiments of improved electrical machines where the coils are wound in a way to reduce phase shift and the coil ends are connected to the commutator segments in a way to reduce voltage leakage

## Claims

1. A DC electric machine comprising a shaft (**31**) rotatable about an axis, a plurality of circumferentially spaced permanent magnets (**25**) disposed around said axis, a plurality of circumferentially spaced magnetic pole teeth (**27**) facing said permanent magnets, electrical coils (**29**) wound on said magnetic pole teeth, a plurality of circumferentially spaced commutator segments (**35**) having clearances between adjacent edges to which ends of said coil windings are connected, and
a plurality of brushes (**36**) in sliding contact with said commutator segments for the transfer of electrical energy between said coils and said brushes, said coil ends being connected to selected of said commutator segments so that electrical energy flows through adjacent coil pairs in the same circuit in opposite directions upon rotation of said machine
**characterized in that** both ends of the winding of each coil winding are connected to the commutator segments, across each other and across one end of the winding of an adjacent coil winding.

2. A DC electric machine as set forth in claim 1, **characterized in that** the coil ends of adjacent pairs are connected to commutator segments (**35**) that are spaced from each other by at least two commutator segments that are not connected to any coil winding (**29**).

3. A DC electric machine as set forth in claim 1, **characterized in that** the number m of permanent magnets (**25**) is an even number of four or more, the number t of the magnetic pole teeth (**27**) is m+2, the number s of the commutator segments (**35**) is 2t and the number b of the brushes (**36**) is m.

4. A DC electric machine as set forth in claim 3, **characterized in that** the number m of the magnets (**25**) is four, the number t of the magnetic pole teeth (**27**) is six, the number s of the commutator segments (**35**) is twelve, and the number b of the brushes (3**6**) is two, three or four.

5. A DC electric machine as set forth in claim 4, **characterized in that** the coil ends of adjacent pairs are connected to commutator segments that are spaced from each other by at least two commutator segments that are not connected to any coil winding.

6. A DC electric machine as set forth in claim 5, **characterized in that** each of the 12 commutator segments (**35**) is connected in parallel to another commutator segment spaced six segments from it.

7. A DC electric machine as set forth in claim 2, **characterized by** further including a second series of coil windings (**29c**, **29d**) formed around each of the pole teeth and connected to the commutator segments that are not connected to the first mentioned series of coil windings.

8. A DC electric machine as set forth in claim 7, **characterized in that** electrical energy flows through adjacent coil pairs in the second series of coils in opposite directions upon rotation of said machine.

9. A DC electric machine as set forth in claim 8, **characterized in that** the number m of permanent magnets (**25**) is an even number of four or more, the number t of the magnetic pole teeth (**27**) is m+2, the number s of the commutator segments (**35**) is 2t and the number b of the brushes (**36**) is m.

10. A DC electric machine as set forth in claim 9, **characterized in that** the number m of the magnets (**25**) is four, the number t of the magnetic pole teeth (**27**) is six, the number s of the commutator segments (**35**) is twelve, and the number b of the brushes (**36**) is two, three or four.

11. A DC electric machine as set forth in any of the claims 1 to 10, wherein the machine comprises an electric motor (**21**).

## Patentansprüche

1. Gleichstrommaschine mit einer um eine Achse drehbaren Welle (31), einer Vielzahl von ringsum verteilten Permanentmagneten (25), die um die Achse herum angeordnet sind, einer Vielzahl von ringsum verteilten Magnetpolzähnen (27), die den Permanentmagneten gegenüberliegen, elektrischen Spulen (29), die um die Magnetpolzähne gewickelt sind, einer Vielzahl von ringsum verteilten Stromwendersegmenten (35), die Aussparungen zwischen benachbarten Kanten aufweisen, mit denen Enden der Spulenwicklungen verbunden sind, und
einer Vielzahl von Bürsten (36) in Schleifkontakt mit den Stromwendersegmenten für die Übertragung von elektrischer Energie zwischen den Spulen und den Bürsten, wobei die Spulenenden mit Ausgewählten aus den Stromwendersegmenten verbunden sind, so dass elektrische Energie durch benachbarte Spulenpaare in derselben Schaltung in gegensätzlichen Richtungen auf eine Drehung der Maschine hin übertragen wird,
**dadurch gekennzeichnet, dass** beide Wicklungsenden jeder Spulenwicklung mit den Stromwendersegmenten kreuzweise miteinander und kreuzweise mit einem Ende der Wicklung einer benachbarten Spulenwicklung verbunden sind.

2. Gleichstrommaschine gemäß Anspruch 1, **dadurch gekennzeichnet, dass** die Spulenenden von benachbarten Paaren mit Stromwendersegmenten (35) verbunden sind, die um zumindest zwei Stromwendersegmente, die nicht mit irgendeiner Spulenwicklung (29) verbunden sind, voneinander entfernt angeordnet sind.

3. Gleichstrommaschine gemäß Anspruch 1, **dadurch gekennzeichnet, dass** die Anzahl m von Permanentmagneten (25) eine gerade Anzahl von 4 oder mehr beträgt, die Anzahl t der Magnetpolzähne (27) m+2 beträgt, die Anzahl s der Stromwendersegmente (35) 2t beträgt und die Anzahl b der Bürsten (36) m beträgt.

4. Gleichstrommaschine gemäß Anspruch 3, **dadurch gekennzeichnet, dass** die Anzahl m der Magnete (25) vier beträgt, die Anzahl t der Magnetpolzähne (27) sechs beträgt, die Anzahl s der Stromwendersegmente (35) zwölf beträgt und die Anzahl b der Bürsten (36) zwei, drei oder vier beträgt.

5. Gleichstrommaschine gemäß Anspruch 4, **dadurch gekennzeichnet, dass** die Spulenenden von benachbarten Paaren mit Stromwendersegmenten verbunden sind, die um zumindest zwei Stromwendersegmente, die nicht mit irgendeiner Spulenwicklung verbunden sind, voneinander entfernt angeordnet sind.

6. Gleichstrommaschine gemäß Anspruch 5, **dadurch gekennzeichnet, dass** jedes der 12 Stromwendersegmente (35) parallel mit einem anderen Stromwendersegment verbunden ist, das sechs Segmente entfernt angeordnet ist.

7. Gleichstrommaschine gemäß Anspruch 2, weiterhin **gekennzeichnet durch** ein Umfassen einer zweiten Serie von Spulenwicklungen (29c, 29d), die um jeden der Polzähne gebildet sind und mit den Stromwendersegmenten verbunden sind, die nicht mit der zuerst genannten Serie von Spulenwicklungen verbunden sind.

8. Gleichstrommaschine gemäß Anspruch 7, **dadurch gekennzeichnet, dass** elektrische Energie durch benachbarte Spulenpaare in der zweiten Serie von Spulen in gegensätzlichen Richtungen auf eine Drehung der Maschine hin übertragen wird.

9. Gleichstrommaschine gemäß Anspruch 8, **dadurch gekennzeichnet, dass** die Anzahl m von Permanentmagneten (25) eine gerade Anzahl von vier oder mehr beträgt, die Anzahl t der Magnetpolzähne (27) m+2 beträgt, die Anzahl s der Stromwendersegmente (35) 2t beträgt und die Anzahl b der Bürsten (36) m beträgt.

10. Gleichstrommaschine gemäß Anspruch 9, **dadurch gekennzeichnet, dass** die Anzahl m der Magnete (25) vier beträgt, die Anzahl t der Magnetpolzähne (27) sechs beträgt, die Anzahl s der Stromwendersegmente (35) zwölf beträgt und die Anzahl b der Bürsten (36) zwei, drei oder vier beträgt.

11. Gleichstrommaschine gemäß einem der Ansprüche 1 bis 10, wobei die Maschine einen Elektromotor (21) aufweist.

## Revendications

1. Machine électrique à courant continu comprenant un arbre (31) rotatif autour d'un axe, une pluralité d'aimants permanents (25) espacés de manière circonférentielle disposés autour dudit axe, une pluralité de dents polaires magnétiques (27) espacées de manière circonférentielle en vis-à-vis desdits aimants permanents, des bobines électriques (29) enroulées sur lesdites dents polaires magnétiques, une pluralité de segments (35) de commutateurs espacés de manière circonférentielle ayant des dégagements entre des bords adjacents auxquels les extrémités desdits enroulements de bobines sont raccordées, et
une pluralité de balais (36) en contact coulissant avec lesdits segments de commutateurs pour le transfert d'énergie électrique entre lesdites bobines et lesdits balais, lesdites extrémités de bobines étant raccordées à des segments sélectionnés parmi lesdits segments de commutateurs de sorte que l'énergie électrique circule à travers des paires de bobines adjacentes dans le même circuit dans des directions opposées lors de la rotation de ladite machine
**caractérisée en ce que** les deux extrémités du bobinage de chaque enroulement de bobine sont raccordées aux segments de commutateurs, l'une à travers l'autre et à travers une extrémité du bobinage d'un enroulement de bobine adjacent.

2. Machine électrique à courant continu selon la revendication 1, **caractérisée en ce que** les extrémités de bobines de paires adjacentes sont raccordées à des segments de commutateurs (35) qui sont espacés les uns des autres par au moins deux segments de commutateurs qui ne sont raccordés à aucun enroulement de bobine (29).

3. Machine électrique à courant continu selon la revendication 1, **caractérisée en ce que** le nombre m d'aimants permanents (25) est un nombre pair de quatre ou plus, le nombre t des dents polaires magnétiques (27) est m+2, le nombre s des segments de commutateurs (35) est 2t et le nombre b des balais (36) est m.

4. Machine électrique à courant continu selon la revendication 3, **caractérisée en ce que** le nombre m des aimants (25) est quatre, le nombre t des dents polaires magnétiques (27) est six, le nombre s des segments de commutateurs (35) est douze, et le nombre b des balais (36) est deux, trois ou quatre.

5. Machine électrique à courant continu selon la revendication 4, **caractérisée en ce que** les extrémités de bobines de paires adjacentes sont raccordées à des segments de commutateurs qui sont espacés les uns des autres par au moins deux segments de commutateurs qui ne sont raccordés à aucun enroulement de bobine.

6. Machine électrique à courant continu selon la revendication 5, **caractérisée en ce que** chacun des 12 segments de commutateurs (35) est raccordé en parallèle à un autre segment de commutateur qui en est espacé de six segments.

7. Machine électrique à courant continu selon la revendication 2, **caractérisée par** le fait d'inclure en plus une deuxième série d'enroulements de bobines (29c, 29d) formées autour de chacune des dents polaires et raccordées aux segments de commutateurs qui ne sont pas raccordés à la première série mentionnée d'enroulements de bobines.

8. Machine électrique à courant continu selon la revendication 7, **caractérisée en ce que** l'énergie électrique circule à travers des paires de bobines adjacentes dans la deuxième série de bobines dans des directions opposées lors de la rotation de ladite machine.

9. Machine électrique à courant continu selon la revendication 8, **caractérisée en ce que** le nombre m d'aimants permanents (25) est un nombre pair de quatre ou plus, le nombre t des dents polaires magnétiques (27) est m+2, le nombre s des segments de commutateurs (35) est 2t et le nombre b des balais (36) est m.

10. Machine électrique à courant continu selon la revendication 9, **caractérisée en ce que** le nombre m des aimants (25) est quatre, le nombre t des dents polaires magnétiques (27) est six, le nombre s des segments de commutateurs (35) est douze, et le nombre b des balais (36) est deux, trois ou quatre.

11. Machine électrique à courant continu selon l'une quelconque des revendications 1 à 10, dans laquelle la machine comprend un moteur électrique (21).
